(19) Europäisches Patentamt
European Patent Office
Office européen des brevets

(11) Veröffentlichungsnummer: **0 077 331**
**B2**

(12) **NEUE EUROPÄISCHE PATENTSCHRIFT**

(45) Veröffentlichungstag der neuen Patentschrift: **23.01.91**

(51) Int. Cl.$^5$: **C 01 B 7/19,** C 01 F 11/46

(21) Anmeldenummer: **82900014.0**

(22) Anmeldetag: **21.12.81**

(86) Internationale Anmeldenummer:
**PCT/CH81/00146**

(87) Internationale Veröffentlichungsnummer:
**WO 82/03848 11.11.82 Gazette 82/27**

(54) **VERFAHREN UND EINRICHTUNG ZUR HERSTELLUNG VON SYNTHETISCHEM ANHYDRIT UND REINER FLUSSSÄURE.**

(30) Priorität: **28.04.81 CH 2745/81**

(43) Veröffentlichungstag der Anmeldung:
**27.04.83 Patentblatt 83/17**

(45) Bekanntmachung des Hinweises auf die Patenterteilung:
**07.08.85 Patenblatt 85/32**

(45) Bekanntmachung des Hinweises auf die Entscheidung u¨ber den Einspruch:
**23.01.91 Patentblatt 91/04**

(84) Benannte Vertragsstaaten:
**FR GB NL**

(56) Entgegenhaltungen:
**CH-A- 540 195**
**CH-A- 617 641**
**DE-A-2 209 960**
**DE-A-2 435 512**
**FR-A-2 279 664**

(73) Patentinhaber: **BUSS AG**
**Lautengartenstrasse 7**
**CH-4052 Basel (CH)**

(72) Erfinder: **BÖSE, Dieter**
**Blumenstrasse 17**
**CH-4106 Therwil (CH)**
Erfinder: **ETTER, René**
**Schauenburgerstrasse 2**
**CH-4052 Basel (CH)**

(74) Vertreter: **Eder, Carl E. et al**
**Patentanwaltsbüro EDER AG Lindenhofstrasse 40**
**CH-4052 Basel (CH)**

EP 0 077 331 B2

**Beschreibung**

Die Erfindung betrifft ein Verfahren gemèss dem Oberbegriff des Anspruches 1.

Synthetischer Anhydrit ist in Ländern, die über unzureichende natürliche Gipsvorkommen verfügen, ein gesuchter Rohstoff. er bildet einen vorzüglichen Zuschlagstoff für die Zementfabrikation und wird auch gern für die Fertigung von Bodenbelägen und Platten mit eingelassenen Heizschlangen verwendet. Voraussetzung ist allerdings, dass bei der Herstellung die notwendige Reinheit erzielt wird, um störende Auswirkungen im Zementoften oder beim Abbinden des angemachten Anhydritgips oder ein nachträgliches Ausblühen zu vermeiden. Für die Zementherstellung ist dabei ein geringer Gehalt an Fluoriden sehr erwünscht, weshalb der synthetische Anhydrit, der bei der gleichzeitigen Herstellung von reiner Flussäure produziert werden kann, besonders gesucht ist.

Der heutige Stand der Technik und die in der Praxis effektiv Anwendung findenden Verfahren sind unter anderen mit Temperaturangaben usw. und mit ausführlichen Literaturzitaten in den folgenden Veröffentlichungen beschrieben:

Matthes/Wehner, "Anorganisch technische Verfahren", VEB Verlag Grundstoffindustrie, (1964) S. 453-455; Ullmanns "Encyclopädie der technischen Chemie" 3, Aufl., Ergänzungsband (1970) S. 449, 450; Ullmans "Encyclopädie der technischen Chemie", 4 Aufl., Bd 11, (1976) S. 599—601 und Kirk-Othmer, "Encyclopedia of Chemical Technology", 3rd Ed., Vol. 10 (1980) S. 742-744.

Aus der schweizerischen Patentschrift 540 195 ist ein Verfahren für die Herstellung von Flussäure bekannt. Dabei entsteht, was allerdings nur nebenbei angedeutet ist, auch noch Anhydrit. Für die Flussäure-Herstellung werden einem drei Stufen aufweisenden Reaktor Flussspat und ein heisses Säuregemisch zugeführt und im Reaktor zur Reaktion gebracht. Die dabei entstehenden, Verunreinigungen enthaltenden Flussäuregase werden einer Waschkolonne zugeführt, dort mit Waschsäure gewaschen und nach weiteren Vorgängen in einer Absorptionskolonne nochmals mit Waschsäure gewaschen. Dabei wird die zur Wäsche in der Absorptionskolonne verwendete Waschsäure, die ungefähr 30% Flussäure, 70% Schwefelsäure und etwas Wasser enthält, der Waschkolonne zugeführt und dort zusammen mit anderen Waschsäuren, wie erwähnt, zur ersten Wäsche der aus dem Reaktor kommenden Gase benutz. Ein Teil der im Sumpf der Waschkolonne anfallenden Waschsäure wird einem Mischbehälter zugeführt und dort mit Schwefelsäure und Oleum gemischt, wobei das bereits erwähnte Säuregemisch entsteht, das dann dem Reaktor zugeführt wird.

Die dem Mischbehälter zugeführte Waschsäure enthält einen grossen Anteil von Fluorverbindungen. Demzufolge weist auch das dem Reaktor zugeführte Säuregemisch einen hohen Anteil von Fluorverbindungen auf, von denen eine durch Fluorsulphonsäure gebildet ist. Dies bringt verschiedene Nachteile, insbesondere hohe Energieverluste und die Bildung unerwünschter Nebenprodukte mit sich, wie nachstehend noch erläutert wird.

Die französische Offenlegungsschrift 2 279 664 offenbart ein Verfahren und eine Einrichtung für die Herstellung von Flussäure und Calciumsulfat aus Schwefelsäure und Flussspat. Die Einrichtung weist zwei Behälter auf, die durch Überläufe miteinander verbunden sind, wobei in beiden Behältern eine Schaufel-Schnecke angeordnet ist. Den Behältern wird Flussspat und Säure zugeführt, wobei die letztere anscheinend Schwefelsäure, Flussäure und Oleum enthält. Ob die dem Reaktor zugeführte Säure auch noch Waschsäure enthält, kann aus der Offenlegungsschrift nicht oder mindestens nicht eindeutig entnommen werden. Das dem Reaktor zugeführt Säuregemisch enthält auch bei diesem bekannten Verfahren einen Fluoranteil, wobei das Fluor wiederum mindestens zum Teil in der Form von Fluorsulphonsäure auftreten dürfte. Im übrigen ergibt der von den genannten Behältern gebildete Reaktor vermutlich nur einen geringen Wirkungsgrad.

Die schweizerische Patentschrift 617 641 offenbart Verfahren und Einrichtungen für die Flussäureherstellung. Dabei wird einem Reaktor Flussspat sowie Schwefelsäure zugeführt, wobei erwähnt ist, es könne eventuell aach noch Oleum zugeführt werden. Bei einer der geoffenbarten Varianten wird die dem Reaktor zugeführte Schwefelsäure vorgängig zum Waschen der bei der Reaktion entstehenden Flussäuregase benutzt. Die bei dieser Variante dem Reaktor zugeführte Säure dürfte, soweit die Sachlage aufgrund der Patentschrift beurteilt werden kann, ebenfalls Fluorsulphonsäure enthalten.

Allen in der Praxis grosstechnisch angewendeten Verfahren ist gemeinsam, dass die aus den Restgasen vor der wässerigen Absorption von $SiF_4$ noch vorhandenen HF-Gehalte mit kalter konzentrierter Schwefelsäure ausgewaschen werden und man das entstehende Säuregemisch von Fluorsulphonsäure mit Schwefelsäure zumischt, unter Zugabe von Oleum das vorhandene Wasser bindet, um dann bei der anschliessenden Reaktion zwischen dem Flusspat und der Schwefelsäure, bei Temperaturen die über ca. 164°C liegen müssen, die im Kreislauf mitgeführte Fluorsulphonsäure zu spalten, und so daraus den HF-Anteil freizusetzen und erneut der Vorreinigung und Kondensation zuzuführen. Dies bedeutet natürlich einen Mehrverbrauch an Energie.

Die Erfindung hat sich nun zur Aufgabe gestellt, ein Verfahren zu schaffen, das die bekannten Verfahren verbessert. Es gilt dabei einen synthetischen Anhydrit zu erzeugen, der nur noch den gewünschten, kleinen Anteil an $CaF_2$ enthält, während die freie $H_2SO_4$ vollkommen neutralisiert ist, aber andere gewünschte Anreger bereits vorhanden sind.

Um qualitativ guten und hochwertigen Anhydrit zu erhalten, sollte man die Reaktion zwischen dem Flussspat und der Schwefelsäure möglichst im stöchiometrischen Verhältnis oder mit nur ganz geringem Schwefelsäureüberschuss führen.

Daneben geht die Forderung, die Reaktion bei nicht zu hohen Temperaturen ablaufen zu lassen, um einen sich bildenden Anhydrit thermisch nicht zu hoch zu beanspruchen.

Dieser Forderung steht nun entgegen, dass nach Ansicht der Fachwelt nur bei einer wesentlich über 200°C, aber unter der Zersetzungstemperatur von Schwefelsäure bei ca. 340°C liegenden Reaktionstemperatur, eine relativ rasche Umsetzung von $CaF_2 + H_2SO_4$ zu HF und Ca $So_4$ erreicht werden kann. Dies scheint durch Angaben in der allgemeinen Literatur bestätigt, beispielsweise in Kirk/Othmer, "Encyclopedia of Chemical Technology", 2nd Ed., Vol. 9 (1966) s. 619, wo die normale Reaktionszeit mit 30—60 Minuten bei 200—250°C angegeben wird. In der Praxis scheinen sich solche Angaben nicht zu bestätigen, die mittlere Verweilzeit des Materials in den Reaktionszonen ist effektiv oft sehr viel länger und die Reaktoren müssen dementsprechend sehr viel grösser ausgelegt werden.

Versucht man die Reaktionszeit zu kürzen, um den Umsatz zu steigern, indem man mit einem grösseren Ueberschuss an Schwefelsäure arbeitet, so erhält man einen nassen Anhydrit mit zu grossem Gehalt an freier Schwefelsäure, die nach dem Austritt aus dem Reaktor abzurauchen beginnt und ganz allgemein die Korrosion verstärkt. Erhöht man nun die Temperatur im Reaktor weit über 250°C, um die überschüssige Schwefelsäure abzutreiben, dann belastet man unnötigerweise die Reaktionsgase damit. Aehnliche Nachteile entstehen, wenn man versucht Schwefelsäure mit Konzentrationen über 98% oder sogar mit freiem Oleumgehalt einzusetzen.

Es muss also nach Wegen gesucht werden, die auch eine möglichst vollständige Reaktion, falls durchführbar, — sogar unter 200°C gestatten.

Die Untersuchung der Diskrepanz zwischen Literaturangaben und Praxis über die Reaktionszeiten führt zu der Erkenntnis, dass sich die Literaturangaben fast immer auf Reaktionen beziehen, die zwischen Säuregrad-Flusspat und Schwefelsäure von ca. 96% unter Energiezufuhr ablaufen, ohne dass rückgeführte Säuregemische beteiligt sind. Die Säuregemische enthalten ja, wie bereits vorstehend erwähnt, einen erheblichen Anteil an Fluorsulphonsäure, der sich bei unter 100°C zwischen $H_2SO_4$ + HF bildet und der bei über ca. 164°C im Reaktor zu zersetzen ist und von denen bekannt ist, dass sie wegen ihres Dampfdruckes die Rekation stören können.

Bei der Herstellung laufen viele komplexe Zwischenreaktionen ab, über die nur wenig Kenntnisse vorliegen.

Ueberraschend ist nun die neue Erkenntnis, dass die Reaktion zwischen dem Flusspat und der Schwefelsäure in Gegenwart von Fluorsulphonsäure viel komplizierter abläuft, als nach bisherigem Wissen angenommen wurde. Die Säuregemische zeigen ein vermehrtes Lösevermögen sowohl für Ca $F_2$ als auch für $CaSO_4$, es ergeben sich instabile Zwischenverbindungen die sich beispielsweise mit

Calcium Fluorsulphonat
$Ca^{++} + HSO_3F + H_3O^+ + 3F^-$
$Ca\ (HSO_4 \cdot F \cdot HF) + Ca\ (HSO_4F)$
$CaF_2 \cdot 1.86\ HF$
$CaF\ (H_2F_3)$
$Ca\ (HF_2)_2$
usw.

beschreiben lassen. Daneben laufen noch die aus der Literatur bekannten Umsetzungen mit den im Spat vorhandenen Verunreinigungen. Die Folge sind schlammige bis zähteigige Zwischenzustände im Reaktionsgut, die sich mehrfach wiederholen, währenddem für eine glatte Reaktionsführung ein feucht — krümeliger Zustand erforderlich ist. Man hat daher schon mehrfach vorgeschlagen, einen Teil des gebildeten Calciumsulfats heiss in die Reaktionszone zurückzuführen, um so zu einem krümeligen Gemisch zu gelangen, in welchem aber immer noch die unstabilen und unerwünscht schlammigen Zwischenprodukte vorhanden sind.

Die Reaktion sollte so geführt werden, dass keine oder nur ganz geringe Anteile an Fluorsulphonsäure in den Reaktor gelangen und auch in diesem die erneute Bildung von Fluorsulphonsäure wirksam unterdrückt wird. Zu diesem Zweck sollten die Komponenten $CaF_2$ und Säuregemisch so heiss in den Reaktor gegeben und der Reaktoreinlauf so beheizt werden, dass die Reaktion bei über 100°C einsetzt, wodurch eine neue Bildung von Fluorsulphonsäure unterbleibt. Die aus dem Reaktor entweichenden Gase sollten aus dem gleichen Grund zunächst in einer ersten Stufe heiss getrocknet, d.h. von Wasser und auch von Staub befreit werden, bevor sie in weiteren Stufen gekühlt werden. Denn eine zu kalte Wäsche würde die erneute Bildung von Fluorsulphonsäuredämpfen fördern und es würde sich kein ausreichendes Verhältnis zwischen der Dampfphase der aufsteigenden Gase und dem Rücklauf einstellen und die Temperatur nicht ausreichen, um die in der Dampfphase neu gebildete Fluorsulfonsäure hydrolitisch zu zersetzen.

Die aus der End-Absorptionsstufe nur leicht erwärmt zurückfliessende Waschsäure mit ziemlich hohem Fluorsulphongehalt wird in einer kleinen Trennkolonne soweit erhitzt, dass die Fluorsulphonsäure gespalten wird und das entstehende HF-Gas direkt der zweiten Reinigungsstufe zugeführt werden kann, bevor die nunmehr auf $H_2SO_4$ konzentrierte und heisse Waschsäure der Reaktionssäure zugemischt wird.

Die gestellte Aufgabe wird ausgehend von dem aus der schweizerischen Patentschrift 540 195 bekannten Verfahren nach der Erfindung durch ein Verfahren gelöst, wie es durch den Anspruch 1 gekennzeichnet ist. Zweckmässige Ausgestaltungen des erfindungsgemässen Verfahrens ergeben sich aus den Ansprüchen 2 bis 9.

Die Erfindung betrifft ferner eine Einrichtung gemäss dem Oberbegriff des Anspruches 10. Die Einrichtung ist nach der Erfindung durch die Merkmale dieses Anspruches gekennzeichnet. Vorteilhaft Ausgestaltungen der erfindungsgemassen Einrichtung ergeben sich aus den vom Anspruch 10 abhängigen Ansprüchen.

Durch das erfindungsgemässe Verfahren kann der Anteil an Fluorverbindungen, d. h. die hauptsächlich in Form von Fluorsulphonsäure gebundene Flussäure im Säuregemisch, welches dem Reaktor zur Reaktion zufliesst, auf ein Minimum reduziert werden, welches durch die Löslichkeit der restlichen Flussäure im Säuregemisch bestimmt wird, Dadurch erzielt man einen Einfluss auf die Hauptreaktion, welche die Bildung der neuen Flussäure thermodynamisch begünstigt. Die intermediären Zustände des $Ca(HSO_3\cdot\text{-}F\cdot HF)$ und $Ca(HSO_4\cdot F)$ werden in ihrer Bildung nicht mehr im gleichen Masse gefördert wie bei bekannten Verfahren. Dadurch wird die zur Umsetzung benötigte Verweilszeit im Reaktor verkürzt, was einer Leistungserhöhung gleichkommt.

Die nahezu vollkommene Ausschliessung von im Kreislauf über das Säuremischgefäss zum Reaktor geführten HF führt zu einer vorteilhaften Verminderung der Korrosion in den Leitungen und Apparaten.

An Hand von Ausführungsbeispielen wird nachstehend das Verfahren und die Einrichtung erläutert und auf den beigefügten Zeichnungen illustriert. Dabei zeigen:

Figur 1 ein schematisches Beispiel des erfindungsgemässen Verfahrensablaufs.

Figur 2 einen vergrösserten Ausschnitt aus Fig. 1 mit einer Variante, und

Figur 3 ein Reaktions-Umsatz-Diagramm zur Verdeutlichung des gegenüber herkömmlichen Verfahren erzielten Fortschritts.

Das Verfahren zur Herstellung von synthetischem Anhydrit umfasst die nachfolgenden Schritte:

1. die Reaktion zur Erzeugung des Anhydrits,
2. die Fertigbehandlung des Anhydrits bis zum Versand,
3. die Reinigung der in der Reaktion gleichzeitig anfallenden Säuredämpfe,
4. die Reinigung der Abgase,
5. die Rückgewinnung von Säureanteilen aus den Waschsäuren und die Aufbereitung des für die Reaktion eingesetzten Säuregemisches.

Zur Erzeugung von gutem Anhydritgips und reiner Flussäure wird zunächst die Reaktion von Flusspat mit Säure, vorwiegend mit konzentrierter Schwefelsäure von 96—98%, unter Wärmezufuhr eingeleitet. Aus Fig. 1 geht dies wie folgt hervor:

Flusspat 1 wird in einem Schleudertrockner 4 erhitzt sowie getrocknet und heiss über einen Sammelbunker 5 in einen Waagenbunker 6 aufgegeben. Aus diesem wird er über ein Dosierorgan 7 durch die Leitung 8 in eine die erste Reaktionsstufe 11 bildende Misch- und Kneteinrichtung gefördert. Die relativ langsam laufende Misch- und Kneteinrichtung mit Antreib 12, führt mit der Schneckenwelle, die einen unterbrochenen Schneckengang besitzt, eine rotierende und gleichzeitig hin- und hergehende Bewegung aus, wobei die Unterbrechungen und der Schneckengang mit im Gehäuse eingesetzten Knetschikanen zusammenwirken. Gleichzeitig wird hinter dem Spateinlauf in Austrittsrichtung ein heisses Säuregemisch durch die Leitung 10 eingespritzt und mit dem noch heissen Spat intensiv vermischt und bei ca. 120—160°C, vorzugsweise 130°C, zur Reaktion gebracht.

Die sehr kurze mittlere Verweilzeit von ca. 1—3 Minuten in der ummantelten und beheizten, die Reaktionsstufe 11 bildenden Misch- und Kneteinrichtung führt nach Ausstoss bereits zur Freisetzung von grossen Mengen HF. Die Umsatzreaktion ist bereits zu ca. mehr als 70% vollendet, wenn das Reaktionsgut im feucht-krümeligen Zustand aus dem nachfolgenden Einwellenmischer, welcher die zweite Reaktionsstufe bildet, ausgestossen wird. Die zweite Reaktionsstufe 13 ist mit einer Einschneckenmaschine mit Schlagpaddeln, d.h. mit einer Wirbelschnecke, ausgerüstet, wird aussen beheizt und weist einen Antrieb 14 auf. Die Drehzahl der Einschneckenmaschine ist wesentlich höher als die der vorangehenden Misch- und Kneteinrichtung der ersten Stufe 11. Die Paddeln unterwerfen das Gut einer Schlagbeanspruchung und fördern es in die dritte Reaktionsstufe weiter. Die dritte Reaktionsstufe wird durch einen aussen-beheizten Drehofen 15 gebildet, der nur mit ca. 1—3 UpM dreht, um dem Reaktionsgut eine ausreichend lange mittlere Verweilzeit zu geben. Der Drehofen 15 ist vom Einlaufende her bis zum Auslauf von 200°C-ca. 300°C ansteigend beheizt. Je nach Platz, d.h. Durchmesser des Drehofens ist der Abzug der verunreinigten HF-Gase im ofenschild oder im Fallschacht 28 angeordnet.

Die Verweilzeit im Drehofen 15 ist so bemessen, dass weniger als 1% $CaF_2$ und geringe Anteile von $H_2SO_4$ im Anhydritgips verbleiben, wenn er aus dem Ofen in eine geneigte Förderschnecke 18 übertritt, in welcher ihm die für die Restneutralisation erforderliche kleine Menge von $Ca(OH)_2$ 19 zugemischt wird.

Der Anhydrit passiert noch eine Feinmühle 20 und wird gebunkert, bevorer bei 60 abgesackt oder in Container verladen wird. Soll der Anhydrit nicht als Zementretarder, sondern als hochwertiger Baustoff verwendet werden, so ist es von Vorteil, dem Spat bereits ca. 0,4 bis 0,7% $K_2SO_4$ als Anreger beizugeben. Dieser nimmt an der Reaktion zwar nicht Teil, wird aber durch sie äusserst fein im Anhydrit verteilt.

Die bei der Erzeugung von Anhydrit gleichzeitig anfallende Flussäure stellt ein weiteres wertvolles Produkt dar, vorausgesetzt dass es wirtschaftlich mit der verlangten Reinheit erzeugt wird. Die aus dem unter leichtem Unterdruck gehaltenem dreiteiligen Reaktorsystem durch die Leitung 16 entweichenden Flussäuredämpfe sind noch stark verunreinigt durch

| | |
|---|---|
| Staub, $SO_2$, $CO_2$ | 1,4% |
| Falschluft | 1,6% |
| Wasserdampft | 2,4% |
| $H_2SO_4$ | 4,4% |
| $SiF_4$ | 2,6% |
| Rest ca. | 87.6% HF |

Diese mit Wasserdampf und mit schwerflüchtigen Verunreinigungen beladenen HF-Gase, die eine Temperatur von ca. 180°C aufweisen, werden dem als Trockner 31 ausgebildeten unteren Teil einer Kolonne zugeführt. Hier rieseln ihnen kalte oder doch gekühlte Säuregemische mit ca. 18° bis 80°C, im Mittel etwa 70°C entgegen, die den Wasserdampf absorbieren und den Staub auswaschen. Gleichzeitig wird aus ihnen bereits ein Teil der als $HSO_3F$ gebundenen HF durch die heissen Gase abgespalten oder doch dessen Neubildung unterdrückt. Die an HF angereicherten Gase steigen nun mit 40 bis 70°C in den eine Kühlkolonne 33 bildenden, oberen Teil der Kolonne 31, 33 auf, wo sie vom Kopf her mit 17°C kalter HF besprüht werden. Weitere Verunreinigungen werden dadurch ausgewaschen und gelangen in den Unterteil. Gleichzeitig wird das Gasgemisch auf ca. 22°C gekühlt und verlässt so die Kühlkolonne 33 der Kolonne 31, 33. Das Gasgemisch gelangt in einen mit ca. 10°C Wasser gekühlten Kondensator 34, wo ein Teil kondensiert und im Behälter 38 aufgefangen wird. Dieser Teil wird durch eine Umwälzpumpe 27 über eine Leitung 39 in den Kopf der Kühlkolonne 33 zurückgepumpt. Eine weitere Menge der Gase gelangt mit etwa 17°C in einen zweiten Kondenser 36, der mit Sole gekühlt ist, so dass die Kondensate mit 9°C in einen weiteren Behälter 38 abfliessen. Aus diesem können sie mit der angebauten Pumpe 27 mit besser als 99,5% HF Reinheit über die Leitung 40 in einen Lagerbehälter gepumpt werden. Für viele technische Anwendungen ist diese Reinheit durchaus ausreichend. Andererseits kann die Säure für besonders hohe Anforderungen noch in die Rektifizierkolonne 41 gepumpf werden, wo man noch die restlichen leicht-flüchtigen Verunreinigungen mit etwas HF abtreibt und aus dem Sumpf eine HF von mehr als 99,99% abzieht und durch den Kühler 44 auf 10°C gekühlt durch Leitung 45 zum Lagertank leitet. Der Kopf der Rektifizierkolonne 41 ist über eine Kreislaufleitung 43 mit einem Kondensator 42 verbunden.

Die aus dem Kopf des Kondensators 36 und der Rektifierkolonne 41 bzw. dem Kondensator 42 durch die Leitungen 50 und 50′ mit ca. 12°C Temperatur entweichenden Restgase, die eine Zusammensetzung von ca.

75% HF
11% $SiF_4$
7% Falschluft
7% Rest, $So_2 + CO_2$ usw.

aufweisen, werden im Absorptionsturm 51 von ihrem HF-Gehalt weitgehendst befreit. Durch die Leitung 55 entweicht nur noch etwas weniger als ein Drittel der Gasmenge mit ca.

24% HF
35% $SiF_4$
21% Falschluft
20% Rest, $SO_2 + CO_2$, usw.

und wird dem Wäscher 57 zugeführt, wo die Restgase mit Kaltwasser 56 sowie mit im Umlauf geführter Schwachsäure solange ausgewaschen werden, bis die Schwachsäure durch die Leitung 58 mit ca. 5% HF, 20% $H_2SiF_6$ und 75% $H_2O$ periodisch abgezogen werden kann. Weniger als 2% des erzeugten $HF + SiF_4$ enden so in der Schwachsäure 58. Die durch den Ventilator 59 ausgeblasene Abluft enthält vor der Abluftkamin-Verdünnung nur noch unter 0,01% HF.

Anschliessend folgt die Rückgewinnung der Fluoranteile aus den Waschsäuren der Absorptionskolonne 51 und des Trockners 31, sowie die Aufbereitung des durch die Leitung 10 strömenden, heissen Säuregemisches, welches der die erste Reaktionsstufe bildende Misch- und Knetvorrichtung zufliesst. Die ca. 18°C kalte Waschsäure aus der Leitung 54, enthaltend ca. 44% HF + 55% $H_2SO_4$, grossenteils in Form von Fluorsulphonsäure mit ca. 1% Wasser, wird über dem unteren Drittel des Trockners 31 eingespritzt. Dort erfolgt gleichzeitig die Zugabe eines Teils der aus dem Sumpf des Trockners 31 mit etwa 80°C abgezogener Waschsäure, die eine Zusammensetzung von etwa 16% HF in 75% $H_2SO_4$ als Fluorsulphonsäure und ca. 9% Wasser hat. Der im Kreislauf rückgeführte Teil dieser Waschsäure wird im Kühler 24 etwa um 10°C gekühlt. Der grössere Anteil gelangt in den Mittelteil der beheitzten Trennkolonne 30, in der die Fluorsulphonsäure fast vollständig gespalten wird, so dass vom Kopf her die entstehenden HF-Dämpfe dem unteren Drittel der Kühlkolonne 33 zugeleitet werden können. Die nunmehr ca. 160°C heisse und von HF befreite Schwefelsäure fliesst aus dem Sumpf der Kolonne 30 durch die Leitung 22 in das mit Heizmänteln und Rühren 9′ ausgerüstete Mischgefäss 9 und wird hier der durch die Leitung 21 in grösserer Menge zufliessenden, im Erhitzer 32 auf ca. 140°C gebrachten, frischen Schwefelsäure beigegeben. Gleichzeitig erfolgt eine Beimischung von etwa 20°C kaltem Oleum 3, welches das im Gemisch vorhandene Wasser bindet und sich dabei unter Wärmeentwicklung zu konzentrierter Schwefelsäure umsetzt.

Das entstehende Säuregemisch mit ca. 97,8% $H_2SO_4$ und nur noch weniger als 1% HF fliesst nun mit etwa 140°C kontinuierlich durch die Leitung 10 in die die erste Reaktionsstufe 11 bildende Misch- und Kneteinrichtung. Die in Fig. 2 gezeigte Variante wird am Schluss des nachfolgenden Beispiels erläutert.

## Beispiel

6 550 kg/h Flusspat 1 von 97% Reinheit werden kontinuierlich mit ca. 100°C der Misch- und Kneteinrichtung 11 zugeführt. Im Säuremischbehälter 9 wird eine Säuregemisch gebildet und zwar aus ca. 900 kg/h im Rücklauf aus der Trennkolonne 30 kontinuierlich zufliessender, heiss mit ca. 160°C

abgetrennter, durch die Leitung 22 fliessender Waschsäure, welche noch ca. 1% HF enthält, sowie aus ca. 3 420 kg/h 140°C heiss aus dem Erhitzer 32 zulaufender konzentrierter 98% Schwefelsäure 2. Das Gemisch wird durch den Zusatz von 3 780 kg/h Oleum 3 von 20°C noch weiter erhitzt und mit einer Temperatur von 140°C durch die Leitung 10 in die Misch- und Kneteinrichtung 11 eingespritzt. In den drei Reaktionsstufen 11, 13, 15 werden unter Wärmezufuhr ca. 3 710 kg/h Reaktionsgase bei ca. 180°C mit etwas über 80% HF-Gehalt und ca. 11 250 kg/h Anhydrit bei 300°C gewonnen, welcher durch eine geneigte Förderschnecke 18 entfernt wird, wobei die Füllung derselben eine Abschirmung gegen den Reaktor bildet. Die Galse, welche die Kühlkolonne 33 mit ca. 22°C verlassen, enthalten nach der Reinigung bereits über 98% HF. Nach der Kondensation fällt im Sammeltank 38 Flussäure an, welche bereits eine Reinheit von mehr als 99,5% aufweist. Diese Flussäure ist als technisch reine HF bereits ohne weitere Behandlung für viele Zwecke verwendbar und kann aus dem Tank 38 durch eine Leitung 40 entnommen werden. Die kondensation wird so eingestellt, dass die mit leichter siedenden Verunreinigungen gemischten Restgase als ca. 80% HF von ca. 9—12°C und ca. 800 kg/h in den Absorptionsturm 51 geleitet werden, wo ca. 720 kg/h 18°C kalte 98 %ige Schwefelsäure 23 zugesetzt werden. Nach der Absorption verlassen noch ca. 280 kg/h Gase den Absorptionsturm, wobei der HF-Gehalt unter 30% gesunken ist und der Luftanteil ca. 20% beträgt. Aus dem Absorptionsturm 51 laufen ca. 1 290 kg/h Waschsäure von 18°C in den Mittelteil der Kühlkolonne 33 zurück. Die durch die Leitung 54 geführte Waschsäure enthält ca. 40% HF, ca 60% $H_2SO_4$ und 1—3% Wasser als Verunreinigung. Die Waschsäure im Sumpf des Trockners 31 der Kühlkolonne dagegen weist nur noch einen Gehalt von unter 12% HF auf.

Gemass dem Beispiel werden ca. 3 040 kg/h Flussäure mit ca. 9°C abgezweigt und in die Rektifizierkolonne 41 eingepumpt. Im Sumpf dieser Kolonne werden ca. 3 000 kg/h Flussäure mit 52°C mit mehr als 99,99% Reinheit abgezogen, während ca. 44 kg/h Verunreinigungen von ca. 47°C gasförmig am Kopf der Kolonne bei 50' abgehen. Die Zuführung von frischer 20°C kalter Schwefelsäure 23 mit 98% zum Absorptionsturm 51 erlaubt eine vorteilhafte Beaufschlagung der Kondensations- und Destillationsstufen, da man die Trennung der unkondensierbaren Verunreinigungen aus dem HF am Kopf der Säulen bzw. in der Kondensation micht zu kritisch zu regein braucht. Die Spaltung der als Fluorsulphonsäure gebundenen HF, die im Rücklauf aus dem Sumpf des Trockners 31 enthalten ist, erfolgt in der Kolonne 30. Am Kopf werden die konzentrierten HF-Dämpfe mit mehr als ca. 150°C abgezogen und in das untere Drittel der vom Trockner 31 und der Kühlkolonne 33 gebildeten, auch zum Waschen dienenden Kolonne 31, 33 wieder eingeführt, die im Sumpf der Kolonne 30 angereicherte konzentrierte Schwefelsäure wird mit ca. 160°C dem Mischgefäss 9 zugeführt.

Damit sinkt der HF-Anteil in dem durch die Leitung 10 strömenden Säuregemisch auf unter 1% und dieses wird der Rekationsstufe 11 mit ca. 140°C zugeführt.

Fig. 2 zeigt eine Variante. Diese geht davon aus, dass gemäss der Diss. "Siedegleichgewichte von Systemen mit Fluorwasserstoff" von V. Kaiser, ETH, Zürich (1964) die Siedegleichgewichte zwischen HF verunreinigt mit Staub, $SO_2$, $SO_3$, $SiF_4$ usw. durch Führung der Temperaturen so festgelegt werden können, dass die Bildung von $HSO_3F$ aus $HF + H_2SO_4$ unterbleibt. Dies ist bekanntlich der Fall bei Temperaturen über 100°C. Bereits bei ca. 80°C findet nur eine Bildung von 1/7 der Verbindung statt, der Rest des Unerwünschten unterbleibt. Kristisch im Verfahren sind einmal die Trocknung der mit ca. 180°C aus der dritten Reaktorstufe 15 durch die Leitung 16 entweichenden Reaktionsgase, d.h. ihre Befreiung von mitgerissenem Staub und $H_2O$. Natürlich wird man die Trocknung mittels $H_2SO_4$ so kühl wie möglich führen, weshalb gegebenenfalls die frische oder Umlaufsäure in den Unterteil der vom Trockner 31 und der Kühlkolonne 33 gebildeten Kolonne mit ca. 70°C eingesprüht wird. Je nach Einstellung der Temperaturen ergibt sich jedoch auch die Möglichkeit, die Bildung von Fluorsulphonsäure bei der Trocknung der Reaktionsgase zu verhindern. In diesem Fall ist die störende Entstehung von Fluorsulphonsäure im wesentlichen nur in der Absorptionskolonne 51 gegeben, die um eine möglichst grosse Absorption von HF aus den Restgasen in der Leitung 50 mit auf 18°C gekühlter konzentrierter Schwefelsäure berieselt wird. Diese Waschsäure enthält dann ca. 40% HF, 60% $H_2SO_4$ und etwa 1—3% Wasser, alles vorwiegend gebunden als $HSO_3F$ mit einer Temperatur von ca. 20°C. in der Kolonne 30 nach Fig. 2 wird nun diese waschsäure zersetzt. Am Kopf geht HF-Dampf ab und über die Leitung 22' in den Trockner 31 und am Sumpf wird konzentrierte und praktisch HF-freie Säure abgeführt und über die Leitung 22 dem Mischgefäss 9 zugegeben. Ferner ist auch der Ausgang der Pumpe 27 durch eine Leitung 26 mit dem Mischgefäss 9 und einem Anschluss des Kühlers 24 verbunden, dessen anderer Anschluss über eine Leitung 25 mit dem Trockner 31 verbunden ist.

Die abschliessende Wäsche der Restgase, um aus ihnen $H_2SiF_6$ zurückzugewinnen, erfolgt im Wäscher 57, in den bei 56 eine Lösung von $H_2O$ plus gegebenenfalls Alkali eingesprüht wird, um eine Schwachsäure von etwa 20°C zu erzeugen und so etwaige Reaktionsverluste zu vermeiden.

Fig. 3 dient zur Erläuterung der Vorteile. Es wird hierbei vom bereits bekannten ausgegangen, wonach sich beim Vermischen von feinverteiltem Feststoff (hier Flusspat aus der Leitung 8) mit einem begrenzten Anteil von Flüssigleit (hier des durch die Leitung 10 zugeführten Säuregemisches) rein physikalisch eine hochviskose Mischphase bildet, die unter Einleitung von entsprechenden knetenden Scherkräften rasch überwunden werden kann, worauf die Freisetzung der HF-Gase einsetzt.

Ist im Säuregemisch ein Anteil von Fluorsulphonsäure enthalten, oder wird durch zu niedrige Anfangstemperaturen deren Neubildung begünstigt, so entstehen nach neuester Erkenntnis instabile Zwischenverbindungen, die die Feststoffteilchen verkleistern und den Fortschritt der Reaktion mit Freisetzung von HF-Gas stark hemmen. Um diese nachteiligen Zwischenzustände zu überwinden, musste bisher sehr viel mehr Energie zugeführt werden, d. h. es wurde viel höher beheizt, was wiederum zu unerwünschten Abdampfverlusten von Schwefelsäure führte, die ausgewaschen und rückgeführt werden musste.

Fig. 3 zeigt mit Kurve 46, wie man in der bisherigen Praxis mit rückgeführtem Säuregemisch, das etwa 15% $HFSO_3$ enthielt, bei ca. 100°C nach ca. 3 Minuten Knet-Mischzeit nur einen etwa 39% Umsatz erzielte, der während der bis zu total ca. 5 Minuten dauernden Förderung durch die zweite Rekationsstufe 13 auf nur total 45% anstieg.

Wiederum unter Grossproduktionsbedingungen im stundenlangen Betrieb wurde gefunden, dass mit Säuregemisch, das nur noch unter 1% $HFSO_3$ enthielt und bei dem die Komponenten bei Reaktionsbeginn auf ca. 140°C gebracht worden waren, die Kurve 47 erzielt wird. Bereits in der ersten Stufe 11 wurde in ca. 3 Minuten bereits 70% des möglichen HF-Gases entwickelt, während in der nachfolgenden zweiten Stufe 13 die Reaktion bis zu ca. 75% in total 5 Minuten weiterlief.

Ueberraschend zeigte sich auch, dass der Einsatz der in der zweiten Reaktionsstufe 13 vorhandenen Wirbelschnecke mit getrennten Antrieb 14 die noch vorhandenen Feststoffteilchen mechanisch derart beanspruchte, dass das Fortschrieten der Reaktion bis in den Kern der Teilchen deutlich beschleunigt wurde, so dass die Nachreaktionszeit in der Stufe drei 15 vorteilhaft gekürzt werden konnte.

**Patentansprüche**

1. Verfahren zur Herstellung von synthetischem Anhydrit und reiner Flussäure, bei welchem einem drei Stufen (11, 13, 15) aufweisenden Reaktor Flusspat und ein heißes Säuregemisch zugeführt sowie zur Reaktion gebracht werden, bei der Reaktion entstehende, Flussäure enthaltende Gase mit Waschsäure gewaschen werden und für die Bildung des genannten Säuregemisches Schwefelsäure, Oleum und vorgangig für die Wäsche benutzte Schwefelsäure aufweisende Waschsäure gemischt werden, dadurch gekennzeichnet, dass die für die Gemischbildung dienende Waschsäure nach ihrer Benutzung für eine Wäsche zwecks Aufspaltung der Fluorsulfonsäure in einer Trennkolonne (30) auf eine Temperatur von ungefahr 160°C erwärmt wird, dass das in den Reaktor gelangende Säuregemisch weniger als 1% Flussäure enthält und dass das Säuregemisch vor seiner Einspeisung in den Reaktor auf eine Temperatur von 100 bis 200°C erwärmt wird.

2. Verfahren nach Anspruch 1, dadurch gekennzeichnet, dass die zur Senkung des Fluor-Anteils des Säuregemischs dienende Behandlung der Waschsäure erfolgt, bevor die letztere zur Bildung des Säuregemischs mit Schwefelsäure und Oleum vermischt wird, wobei die Temperaturen des dem Reaktor zugeführten Säuregemischs und Flusspates vorzugsweise derart festgelegt werden, dass die Reaktion im Reaktor bei über 100°C einsetzt.

3. Verfahren nach Anspruch 1 oder 2, dadurch gekennzeichnet, dass die Reaktionsgase vom Reaktor sowie der in der Trennkolonne (30) beim Aufspalten der Fluorsulfonsäure entstehender Flussäure-Dampf einem Trockner (31) zugeführt werden, dass die Reaktionsgase in diesem gewaschen und getrocknet werden, worauf die dabei gebildeten, an Flussäure angereicherten Gase mit kalter Flussäure besprüht und abgekühlt werden, dass danach durch Kondensation Flussäure aus ihnen ausgeschieden wird, dass die verbliebenden Restgase in einem Absorptionsraum (51) mit konzentrierte Schwefelsäure enthaltender Waschsäure gewaschen werden und dass die dabei im Absorptionsraum (51) anfallende, für die Restgaswäsche benutzte, Fluorsulfonsäure enthaltende Waschsäure beispielsweise nach einer zwischengeschalteten Verwendung für eine Wäsche (Figur 1) oder ohne eine solche Zwischen-Verwendung (Figur 2), mindestens teilweise der Trennkolonne (30) zugeführt wird.

4. Verfahren nach Anspruch 3, dadurch gekennzeichnet, dass im Absorptionsraum (51) für die Restgaswäsche benutzte, kalte Waschsäure dem Trockner (31), beispielsweise in dessen unterem Drittel, zugeführt und im Trockner (31) zum Waschen der dem Trockner (31) vom Reaktor zugeführten Reaktionsgase benutzt wird und dass aus dem Trockner (31) in diesem zum Waschen und Trocknen der Reaktionsgase benutzte Waschsäure entnommen wird, von der ein Teil im Kreislauf wieder dem Trockner (31) und ein anderer Teil der Trennkolonne (30) zugeführt wird (Fig. 1), wobei beispielsweise aus den durch die Behandlung im Trockner (31) und die anschliessende Abkühlung aus den Reaktionsgasen gewonnenen, mit Flussäure angereicherten, Gasen, vorzugsweise in einer weiteren Kondensation, Flussäure mit einer Reinheit von mindestens 99,5% gewonnen wird.

5. Verfahren nach Anspruch 3, dadurch gekennzeichnet, dass im Absorptionsraum (51) für die Restgaswäsche benutzte Waschsäure ohne Durchleitung durch den Trockner (31) der Trennkolonne (30) zugeführt und in dieser für die Fluorsulfonsäureaufspaltung erwärmt wird (Figur 2).

6. Verfahren nach einem der Ansprüche 3 bis 5, dadurch gekennzeichnet, dass die Temperaturen der dem Trockner (31) aus dem Reaktor zugeführten, heissen Reaktionsgase, der dem Trockner (31) zugeführten, heissen Waschsäure und des aus der Trennkolonne (30) zugeführten Flussäure-Dampfes derart festgelegt sind, dass die Reaktionsgase im Trockner (31) ohne wesentliche Bildung von Fluorsulfonsäure gewaschen und getrocknet werden, wobei beispielsweise Waschsäure aus dem Sumpf des Trockners (31) zur Bildung des genannten Säuregemisches verwendet wird.

7. Verfahren nach einem der Ansprüche 1 bis 6, dadurch gekennzeichnet, dass heisser Flusspat in eine eine erste Reaktionsstufe bildende Mischund Kneteinrichtung (11) gefördert, dort mit einem heissen Säuregemisch intensiv vermischt bei 120 bis 160°C, beispielsweise bei ungefähr 130°C und beispielsweise bei einer mittleren Verweilzeit von 1 bis 3 Minuten, zur Reaktion gebracht wird, worauf das Reaktionsgut in einer zweiten Reaktionsstufe (13) bei Wärmezufuhr behandelt und aus dieser Stufe (13) in feucht-krümeligem Zustand in eine dritte Reaktionsstufe (15) ausgestossen wird, wo es beispielsweise von ungefähr 200°C auf ungefähr 300°C ansteigend beheizt wird.

8. Verfahren nach einem der Ansprüche 1 bis 7, dadurch gekennzeichnet, dass in der Trennkolonne (30) aus der Waschsäure gewonnene und aus dem Sumpf der Trennkolonne (30) entnommene, beispielsweise mindestens zum grössten Teil aus Schwefelsäure bestehende, aufbereitete Waschsäure für die Bildung des genannten Säuregemisches in einem Mischgefäss (9) mit frischer, heisser Schwefelsäure und kaltem Oleum vermischt wird.

9. Verfahren nach einem der Ansprüche 1 bis 8, dadurch gekennzeichnet, dass das Säuregemisch dem Reaktor mit einer Temperatur von etwa 140°C oder 150 bis 160°C zugeführt wird.

10. Einrichtung zur Ausführung des Verfahrens nach Anspruch 1, mit einem dreistufigen Reaktor (11, 13, 15), wobei die erste Stufe (11) Anschlüsse (8, 10) zur Flusspatzufuhr und zum Einbringen eines heissen Säuregemisches aufweist, eine der auf die erste Stufe (11) folgenden Stufen (13, 15) eine Abzugleitung (16) für verunreinigte Flussäuredämpfe besitzt, und die dritte Stufe (15) mit einer Entnahmeeinrichtung für Anhydrit ausgerüstet ist, und mit Mitteln (22, 27, 30, 31, 51), um zum Waschen von beispielsweise Flussäure enthaltenden Gasen benutzte Waschsäure dem zum Einleiten des Säuregemisches in den Reaktor dienenden Anschluss (10) zuzuführen, dadurch gekennzeichnet, dass zwischen einem zum Waschen von Gasen dienenden Raum (31, 51) und dem zum Einleiten des Säuregemisches in dem Reaktor dienenden Anschluss (10) eine beheizbare Trennkolonne (30) zum Entfernen von Fluorsulfonsäure aus der Waschsäure vorhanden ist.

11. Einrichtung nach Anspruch 10, dadurch gekennzeichnet, dass der Kopf der Trennkolonne (30) mit einem mit dem Reaktor verbundenen Trockner (31) zum Waschen und Trocknen vom Reaktor kommender Reaktionsgase verbunden ist, dass der Trockner (31) mit seinem oberen Teil (33) mit zwei hintereinander geschaltete Kondensatoren (34, 36) verbunden ist, zwischen welchen ein Auffangbehälter (38) angeordnet ist, der über eine Leitung (39) und eine Pumpe (27) mit dem Kopf (33) des Trockners (51) verbunden ist.

12. Einrichtung nach Anspruch 11, dadurch gekennzeichnet, dass der Sumpf des Trockners (31) über eine Kreislaufleitung mit einer Pumpe (27) mit einem andern Teil des Trockners (31) und mit der Trennkolonne (30) verbunden ist.

13. Einrichtung nach Anspruch 12, dadurch gekennzeichnet, dass der sich in der Gasströmungsrichtung gesehen an zweiter Stelle befindende Kondensator (36) mit einer Absorptionskolonne (51) zum Waschen der von Kondensator (36) kommenden Gase verbunden ist und dass die Absorptionskolonne (51) durch eine leitung (54) mit dem Trockner (31) verbunden ist, um diesem in der Absorptionskolonne (51) benutzte Waschsäure zuzuführen.

14. Einrichtung nach Anspruch 11, dadurch gekennzeichnet, dass der sich in der Gasströmungsrichtung gesehen an zweiter Stelle befindende Kondensator (36) mit einer Absorptionskolonne (51) zum Waschen der vom Kondensator (36) kommenden Gase verbunden ist, und dass die Absorptionskolonne (51) durch eine Leitung (54) mit der Trennkolonne (30) verbunden ist, um dieser in der absorptionskolonne (51) benutzte Waschsäure zuzuführen.

15. Einrichtung nach einem der Ansprüche 10 bis 14, dadurch gekennzeichnet, dass die Abzugleitung (16) für die verunreinigten Flussäuredämpfe an die zweite Stufe (13) angeschlossen ist.

**Revendications**

1. Procédé pour la préparation d'anhydrite synthétique et d'acide fluorhydrique pur, dans lequel on introduit dans un réacteur présentant trois étages (11, 13, 15) du spath-fluor et un mélange d'acides chaud, que l'on porte à réaction, on lave par un acide de lavage les gaz obtenus lors de la réaction et contenant de l'acide fluorhydrique, et on mélange, pour la formation du mélange d'acides mentionné ci-dessus, de l'acide sulfurique, de l'oléum et de l'acide de lavage, contenant de l'acide sulfurique, utilisé préalablement pour le lavage, caractérisé en ce que l'acide de lavage, servant à la formation du mélange, après son utilisation à un lavage, est chauffé dans une colonne de séparation (30) à une température d'environ 160°C, dans le but de décomposer l'acide fluorosulfonique, que le mélange acide, arrivant au réacteur, contient moins de 1% d'acide fluorhydrique, et que le mélange acide est chauffé à une température de 100 à 200°C, avant son introduction dans le réacteur.

2. Procédé selon la revendication 1, caractérisé en ce que le traitement de l'acide de lavage servant à abaisser la teneur du mélange d'acides en fluor a lieu avant que l'acide de lavage ne soit additionné d'acide sulfurique et d'oléum pour la formation du mélange d'acides, ce à l'occasion de quoi la température du mélange d'acides introduit dans le réacteur et celle du spath-fluor sont de préférence définies de façon que la réaction se déclenche dans le réacteur au-dessus de 100°C.

3. Procédé selon l'une des revendications 1 ou 2, caractérisé en ce que les gaz de réaction

provenant du réacteur, ainsi que l'acide fluorhydrique sous forme vapeur obtenu dans la colonne de séparation (30) lors de la dissociation de l'acide fluorsulfonique, sont envoyés à un sécheur (31), que les gaz de réaction sont lavés et séchés dans ce dernier, ce après quoi les gaz alors formés, enrichis en acide fluorhydrique, sont arrosés d'acide fluorhydrique froid et refroidis, que, ensuite, l'acide fluorhydrique en est séparé par condensation, que les gaz résiduels restants sont lavés dans une chambre d'absorption (51) avec un acide de lavage contenant de l'acide sulfurique concentré, et que l'acide de lavage obtenu alors dans la chambre d'absorption (51), utilisé pour le lavage des gaz résiduels et contenant de l'acide fluorosulfonique, est, par exemple après une utilisation intermédiaire pour un lavage (Figure 1), ou sans une telle utilisation intermédiaire (Figure 2), envoyé, au moins partiellement, à la colonne de séparation (30).

4. Procédé selon la revendication 3, caractérisé en ce que l'acide de lavage froid, utilisé dans la chambre d'absorption (51) pour le lavage des gaz résiduels, est amené au sécheur (31), par exemple dans son tiers inférieur, et est utilisé dans le sécheur (31) pour laver les gaz de réaction envoyé du réacteur au sécheur (31), et qu'on prélève du sécheur (31), dans ce dernier, de l'acide de lavage utilisé pour le lavage et le séchage des gaz de réaction, acide dont une partie est renvoyée en recirculation au sécheur (31) et une autre partie à la colonne de séparation (30) (Figure 1), ce à l'occasion de quoi on obtient, de préférence lors d'une condensation supplémentaire, de l'acide fluorhydrique présentant une pureté d'au moins 99,5%, par exemple à partir des gaz, enrichis en acide fluorhydrique, obtenus à partir des gaz de réaction, par le traitement dans le sécheur (31) et le refroidissement qui suit.

5. Procédé selon la revendication 3, caractérisé en ce que l'acide de lavage utilisé dans la chambre d'absorption (51) pour le lavage des gaz résiduels est envoyé, sans passage par le sécheur (31), à la colonne de séparation (30), et y est chauffé pour la dissociation de l'acide fluorosulfonique (Figure 2).

6. Procédé selon l'une des revendications 3 à 5, caractérisé en ce que la température des gaz de réaction chauds, amenés du réacteur au sécheur (31), celle de l'acide de lavage chaud amené au sécheur (31) et celle de la vapeur d'acide fluorhydrique amenée de la colonne de séparation (30) sont définies de façon que les gaz de réaction soient lavés et séchés dans le sécheur (31) sans une importante formation d'acide fluorosulfonique, ce à l'occasion de quoi on utilise par exemple, pour la formation du mélange d'acides mentionné, de l'acide de lavage provenant du fond du sécheur (31).

7. Procédé selon l'une des revendications 1 à 6, caractérisé en ce que du spath-fluor chaud est envoyé dans un équipement de mélange et de malaxage (11) formant un premier étage de réaction, y est vigoureusement mélange à un mélange d'acides chaud et mis à réagir à 120 à 160°C, par exemple à environ 130°C, et par exemple pour un temps de séjour moyen de 1 à 3 minutes, ce après quoi le produit de réaction est traité dans un deuxième étage de réaction (13) avec apport de chaleur et est rejeté de cet étage (13) à l'état humide et grumeleux pour être envoyé dans un troisième étage de réaction (15), où il est chauffé d'une manière croissante d'environ 200°C à environ 300°C.

8. Procédé selon l'une des revendications 1 à 7, caractérisé en ce que l'acide de lavage traité, constitué par exemple au moins pour sa plus grande partie d'acide sulfurique, obtenu à partir de l'acide de lavage dans la colonne de séparation (30) et prélevé du fond de la colonne de séparation (30), est, pour la formation dudit mélange d'acides, mélangés dans un réacteur de mélange (9) à de l'acide sulfurique frais et chaud et à de l'olèum froid.

9. Procédé selon l'une des revendications 1 à 8, caractérisé en ce que le mélange d'acides est amené au réacteur à une température d'environ 140°C ou de 150 à 160°C.

10. Appareillage pour la mise en oeuvre du procédé selon la revendication 1, avec un réacteur à trois étages (11, 13, 15) où le premier étage (11) possède des raccordements (8, 10) pour l'apport du spath-fluor et pour introduire un mélange chaud d'acides, un étage (13, 15), qui suit le premier étage (11), possède une conduite d'évacuation (16) pour les vapeurs d'acide fluorhydrique chargées d'impuretés, et le troisième étage (15) est pourvu d'un équipement de prélèvement pour l'anhydrite, et avec des moyens (22, 27, 30, 31, 51), pour amener l'acide de lavage utilisé pour le lavage des gaz contenant par exemple de l'acide fluorhydrique au raccordement (10) servant à l'introduction du mélange d'acides dans le réacteur, caractérisé en ce qu'une colonne de séparation chauffable (30) destinée à éliminer de l'acide de lavage l'acide fluorsulfonique est installée entre une chambre (31, 51) servant au lavage des gaz et le raccordement (10) servant à l'introduction du mélange d'acides dans le réacteur.

11. Appareillage selon la revendication 10, caractérisé en ce que la tête de la colonne de séparation (30) est reliée à un sécheur (31), luimême relié au réacteur, pour laver et sécher les gaz de réaction provenant du réacteur, et que le sécheur (31); par sa partie supérieure (33), est relié à deux condenseurs (34, 35), montés en aval l'un de l'autre, entre lesquels est disposé un récipient récepteur (38), qui est relié à la tête (33) du sécheur (51) par une conduite (39) et une pompe (27).

12. Appareillage selon la revèndication 13, caractérisé en ce que le fond du sécheur (31) est, par l'intermédiaire d'une conduite de recirculation ayant une pompe (27), relié à une autre partie du sécheur (31) et à la colonne de séparation (30).

13. Appareillage selon la revendication 12, caractérisé en ce que le condenseur (36) se trouvant, quand on le regarde dans le sens d'écoulement du gaz, en deuxième position, est

relié à une colonne d'absorption (51) pour laver les gaz provenant du condenseur (36), et que la colonne d'absorption (51) est reliée par une conduite (54) au sécheur (341), pour amener à ce dernier l'acide de lavage utilisé dans la colonne d'absorption (51).

14. Appareillage selon la revendication 11, caractérisé en ce que le condenseur (36) se trouvant, quand on le regarde dans le sens d'écoulement du gaz, en deuxième position, est relié à une colonne d'absorption (51) pour le lavage des gaz provenant du condenseur (36), et que la colonne d'absorption (51) est reliée par une conduite (54) à la colonne de séparation (30) pour amener à cette dernière l'acide de lavage utilisé dans la colonne d'absorption (51).

15. Appareillage selon l'une des revendications 10 à 16, caractérisé en ce que la conduite d'évacuation (16) des vapeurs d'acide fluorhydrique chargées d'impuretés est raccordée au deuxième étage (13).

## Claims

1. Process, for the production of synthetic anhydrite and pure hydrofluoric acid, in which fluorite and a hot acid mixture are conducted to and brought into reaction in a reactor displaying three stages (11, 13, 15), gases arising during the reaction and containing hydrofluoric acid are washed with washing acid and mixed for the formation of the named acid mixture of sulphuric acid, oleum and washing acid that has previously been used for the washing and contains sulphuric acid, characterised thereby, that the washing acid serving for the formation of the mixture is after its use for a washing heated in a fractionating column (30) to a temperature of about 160°C for the purpose of cracking of the fluorsulphonic acid, that the acid mixture getting into the reactor contains less than 1% of hydrofluoric acid and that the acid mixture before its feeding into the reactor is heated to a temperature of 100 to 200°C.

2. Process according to claim 1, characterised thereby, that the treatment, which serves for the lowering of the fluorine component of the acid mixture, of the washing acid takes place before thef latter is intermixed with sulphuric acid and oleum for the formation of the acid mixture, wherein the temperatures of the acid mixture and fluorite conducted to the reactor are preferably fixed in such a manner that the reaction in the reactor sets in at above 100°C.

3. Process accordicng to claim 1 or 2, characterised thereby, that the reaction gases from the reactor as well as the hydrofluoric acid vapour arising on the cracking of the fluorsulphonic acid in the fractionating column (30) are conducted to a drier (31), that the reaction gases are washed and dried in this, whereupon the gases formed in that case and enriched in hydrofluoric acid are sprayed with cold hydrofluoric acid and cooled down, that hydrofluoric acid is thereafter separated out from them through condensation, that the remaining residual gases are washed with washing acid containing concentrated sulphuric acid in an absorption chamber (51) and that the washing acid, which arises in that case in the absorption chamber (51), is used for the residual gas washing and contains fluorsulphonic acid, is conducted at least in part to the fractionating column (30), for example after an interposed use for a washing (Figure 1) or without such an intermediate use (Figure 2).

4. Process according to claim 3, characterised thereby, that cold washing acid used for the residual gas washing in the absorption chamber (51) is conducted to the drier (31), for example in its lower third, and used in the drier (31) for the washing of the reaction gases conducted from the reactor to the drier (31) and that washing acid, which has been used for the washing and drying of the reaction gases in the drier (31), is taken from this and one part thereof is conducted to the fractionating column (30) (Figure 1), wherein hydrofluoric acid of a purity of at least 99.5% is obtained, preferably in a further condensation, for example from gases which have been obtained from the reaction gases through the treatment in the drier (31) and the subsequent cooling-down and are enriched in hydrofluoric acid.

5. Process according to claim 3, characterised thereby, that washing acid used for the residual gas washing in the absorption chamber (51) is conducted, without being passed through the drier (31), to the fractionating column (30) and heated in this for the cracking of the fluorsulphonic acid (Figure 2).

6. Process according to one of the claims 3 to 5, characterised thereby, that the temperatures of the hot reaction gases conducted from the reactor to the drier (31), of the hot washing acid conducted to the drier (31) and of hydrofluoric acid vapour supplied from the fractionating column (30) are fixed in such a manner that the reaction gases are washed and dried without significant formation of fluorsulphonic acid in the drier (31), wherein for example washing acid from the sump of the drier (31) is used for the formation of the named acid mixture.

7. Process according to one of the claims 1 to 6, characterised thereby, that hot fluorite is conveyed into a mixing and kneading equipment (11) forming a first reaction stage, is there intensively intermixed with a hot acid mixture and brought into reaction iat 120 to 160°C, for example at approximately 130°C and for example with a mean dwell time of 1 to 3 minutes, whereupon the reaction stock is treated with the addition of heat in a second reaction stage (13) and expelled in moist crumbly state from this stage (13) into a third reaction stage (15), where it is heated for example from approximately 200°C rising to approximately 300°C.

8. Process according to one of the claims 1 to 7, characterised thereby, that prepared washing acid, which has been obtained from the washing acid in the fractionating column (30) and taken from the sump of the fractionating column (30) and which for example consists for the largest

part of sulphuric acid, is intermixed with fresh hot sulphuric acid and cold oleum in a mixing vessel (9) for the formation of the named acid mixture.

9. Process according to one of the claims 1 to 8, characterised thereby, that the acid mixture is conducted to the reactor at a temperature of approximately 140°C or 150 to 160°C.

10. Equipment, for carrying out the process according to claim 1, with a three-stage reactor (11, 13, 15), wherein the first stage (11) displays connections (8, 10) for the supply of fluorite and for the introduction of a hot acid mixture, one of the stages (13, 15) following the first stage (11) possesses a drain duct (16) for polluted hydrofluoric acid vapours and the third stage (15) is equipped with a withdrawal equipment for anhydrite and with means (22, 27, 30, 31, 51) to conduct washing acid, which has been used for the washing of gases for example containing hydrofluoric acid, to the connection (10) serving for the introduction of the acid mixture into the reactor, characterised thereby, that a heatable fractionating column (30) for the removal of fluorsulphonic acid from the washing acid is present between a chamber (31, 51) serving for the washing of gases and the connection (10) serving for the introduction of the acid mixture into the reactor.

11. Equipment according to claim 10, characterised thereby, that the head of the fractionating column (30) is connected with a drier (31), which is connected with the reactor, for the washing and drying of reaction gases coming from the reactor, that the drier (31) is connected by its upper part (33) with two condensers (34, 36), which are connected one behind the other and between which a collecting tank (38) is arranged, which is connected through a duct (39) and a pump (27) with the head (33) of the dryer (31).

12. Equipment according to claim 11, characterised thereby, that the sump of the dryer (31) is connected through a circuit loop duct with a pump (27) to another part of the dryer (31) and to the fractionating column (30).

13. Equipment according to claim 12, characterised thereby, that the condenser (36), which seen in gas flow direction is disposed in second place, is connected with an absorption column (51) for the washing of the gases coming from the condenser (36) and that the absorption column (51) is connected through a duct (54) with the drier (31) in order to supply this with washing acid used in the absorption column (51).

14. Equipment according to claim 11, characterised thereby, that the condenser (36), which seen in gas flow direction is disposed in second place, is connected with an absorption column (51) for the washing of the gases coming from the condenser (36) and that the absorption column (51) is connected through a duct (54) with the fractionating column (30) in order to supply this with washing acid used in the absorption column (51).

15. Equipment according to one of the claims 10 to 14, characterised thereby, that the drain duct (16) for the polluted hydrofluoric acid vapours is connected to the second stage (13).

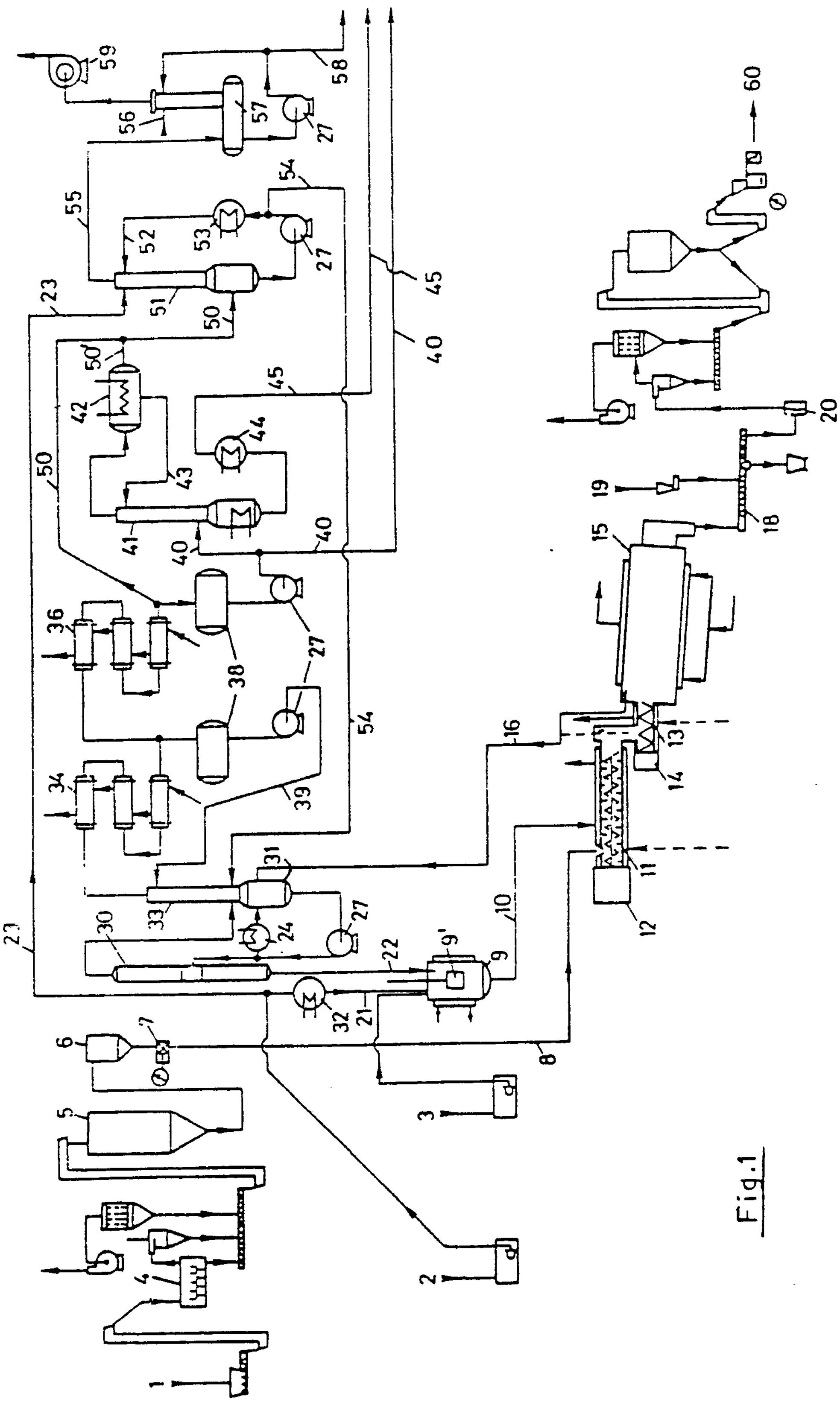
1
2
3
4
5
6
7
8
9
9'
10
11
12
13
14
15
16
18
19
20
21
22
23
24
27
30
31
32
33
34
36
38
39
40
41
42
43
44
45
50
50'
51
52
53
54
55
56
57
58
59
60

Fig.1

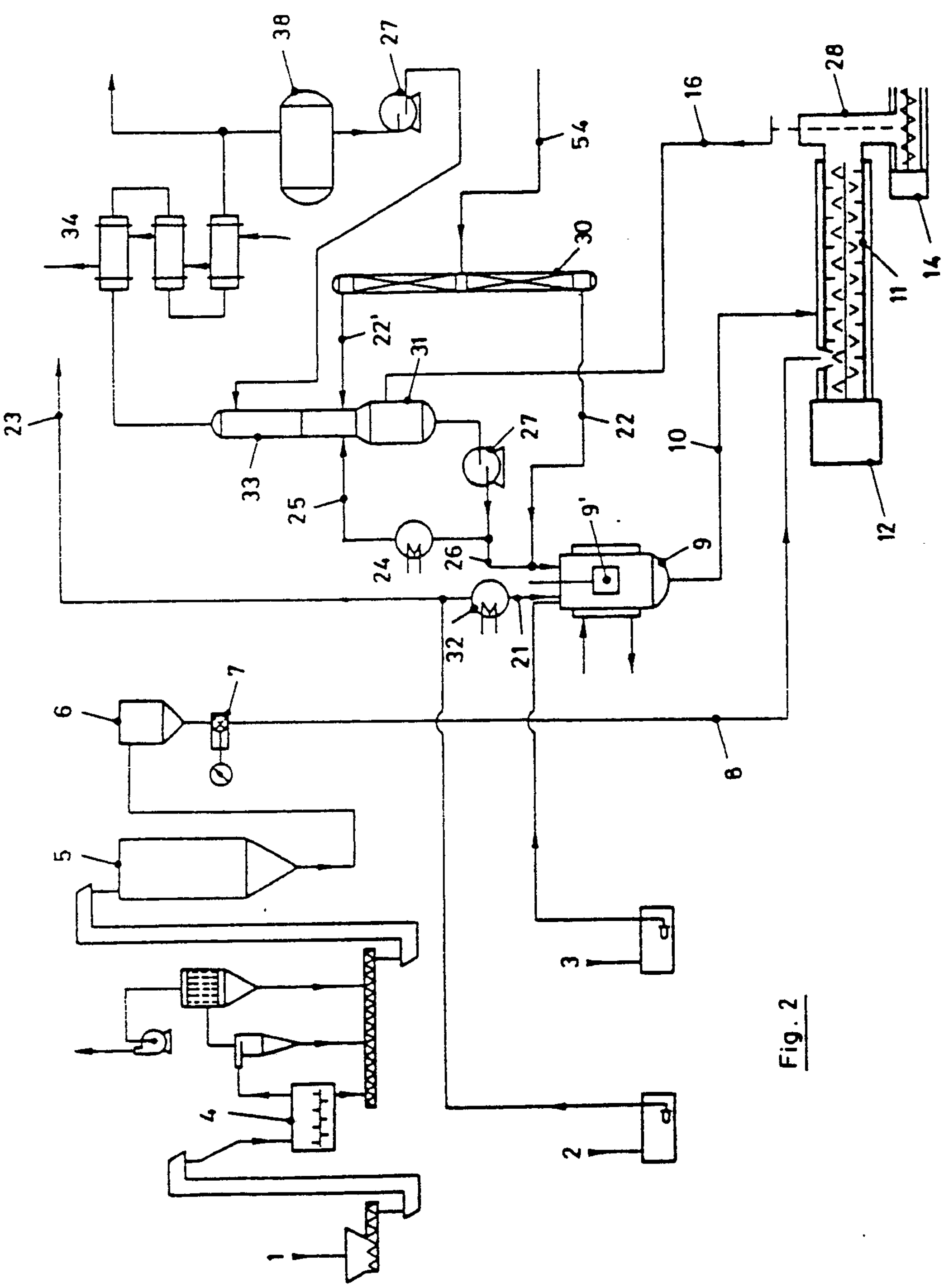
1
2
3
4
5
6
7
8
9
9'
10
11
12
14
16
21
22
22'
23
24
25
26
27
27
28
30
31
32
33
34
38
54

Fig. 2

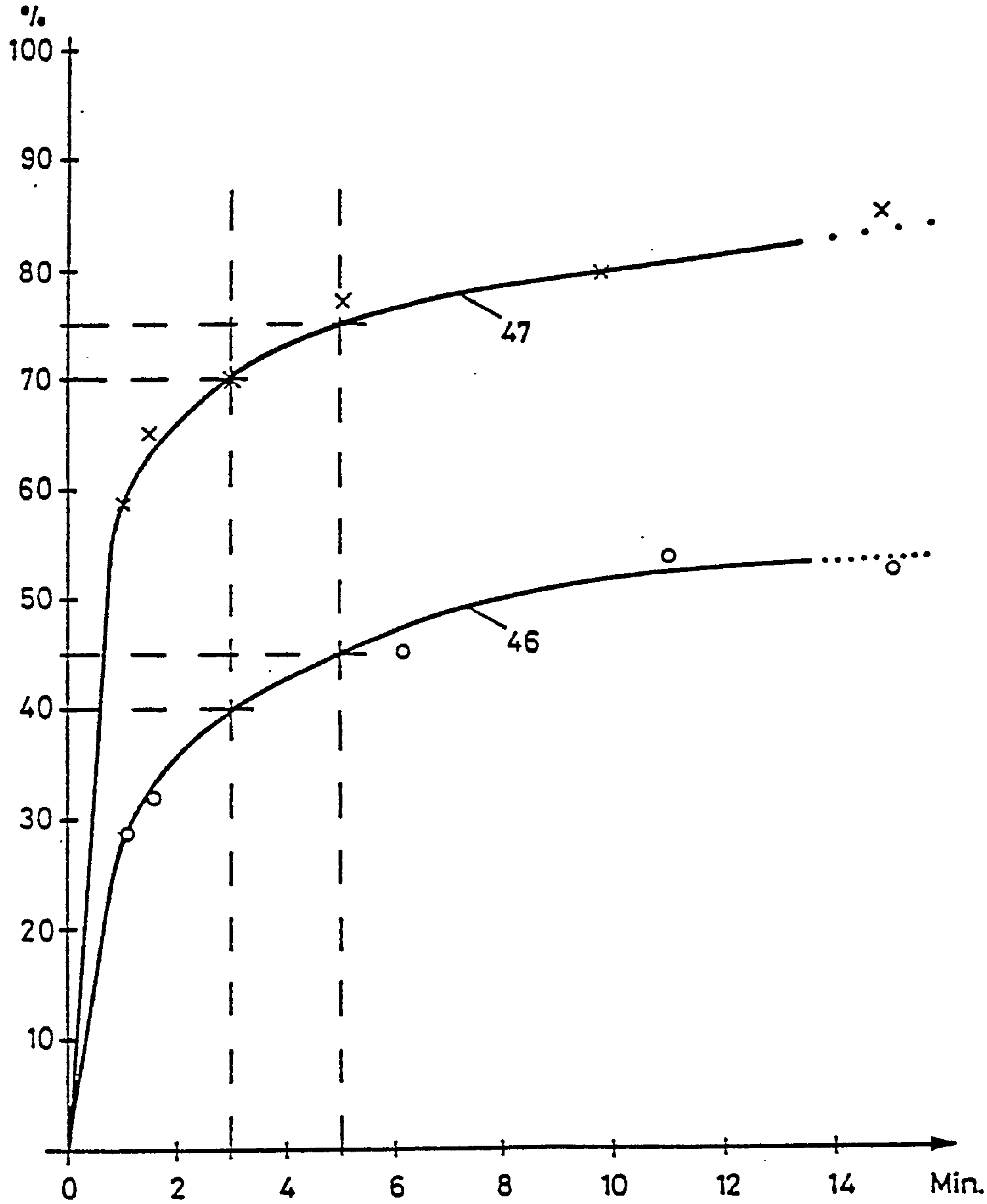


Fig. 3